# EUROPEAN PATENT SPECIFICATION

(11) **EP 3 357 373 B1**
(45) Date of publication and mention of the grant of the patent: **25.03.2020**
(21) Application number: 17154810.0
(22) Date of filing: 06.02.2017
(51) Int. Cl.: A47B 13/00, A47C 7/42

(54) **JOINT ASSEMBLY FOR CONNECTING A FIRST FURNITURE PART AND A SECOND FURNITURE PART TO EACH OTHER**
VERBINDUGSMONTAGE ZUM VERBINDEN EINES ERSTEN MÖBELTEILS MIT EINEM ZWEITEN MÖBELTEIL
ENSEMBLE CONJOINT POUR CONNECTER UNE PREMIERE PIECE DE MEUBLE A UNE DEUXIEME PIECE DE MEUBLE

(43) Date of publication of application: 08.08.2018
(73) Proprietor: Lammhults Möbel Aktieboläg, 360 30 Lammhult (SE)
(72) Inventor: STENFELT, Jim, 352 41 Växjö (SE)
(74) Representative: AWA Sweden AB

(56) References cited:
- WO-A1-2016/071008
- BE-A- 514 487
- US-A- 1 520 520
- US-A- 2 281 902
- US-A- 3 749 465

## Description

### Technical Field of the Invention

The present invention relates to a joint assembly for connecting a first furniture part and a second furniture part to each other.

### Background Art

Joint assemblies of the above mentioned type are previously known. In known furniture assemblies the furniture parts are typically connected to each other by means of fastening elements, e.g. screws or bolts, and/or by means of adhesives.

Such joint assemblies may however be considered to affect the appearance of an assembled furniture in a negative manner. Furthermore, use of adhesives may be considered hazardous to the environment.

WO 2016/071008 A1 describes a fastening device for fastening to a furniture panel. US 2 281 902 A describes a chair that comprises a frame to which a seat and a back are attached.

### Summary of the Invention

It is an object of the present invention to overcome the above described drawbacks, and to provide an improved joint assembly for connecting a first furniture part and a second furniture part to each other.

These and other objects that will be apparent from the following summary and description are achieved by a joint assembly according to the appended claims.

According to the present disclosure there is provided a joint assembly for connecting a first furniture part and a second furniture part to each other, wherein said joint assembly comprises a first undercut groove portion formed in said first furniture part, a second undercut groove portion formed in said first furniture part, a first connector comprising a base portion and a protruding portion, said base portion being insertable, in a first insertion direction, into an engaged position in one of said undercut groove portions, a second connector comprising a base portion and a protruding portion, said base portion being insertable, in a second insertion direction, into an engaged position in one of said undercut groove portions, wherein said first and said second insertion directions are different from each other, a first connector receiving portion formed in said second furniture part and configured to receive one of said connectors, a second connector receiving portion formed in said second furniture part and configured to receive one of said connectors, wherein said connector receiving portions are situated so as to receive the first and the second connectors when they are situated in their respective engaged positions and to maintain them in their respective engaged positions.

This joint assembly enables a thin furniture part, such as a board, to be connected to another furniture part without the need of through holes in the board. Hence, the joint assembly allows a thin furniture part, such as e.g. a seat of a chair, to be connected to a frame part of the chair without affecting the seating surface of the chair. An attractive appearance may thus be achieved, although the seat is relatively thin. Furthermore, the joint assembly enables a thin furniture part to be connected to a frame part without the need of adhesives. The joint assembly thus enables furniture to be assembled in an environmentally friendly manner. Furthermore, it enables furniture to be easily disassembled, which allows components to be recycled. For instance, parts of a chair may be assembled with fastening elements, such as e.g. screws or bolts, making it easy to disassemble the chair and recycle the components. Hence, the joint assembly may significantly reduce the environmental impact compared to known joint assemblies. Also, the joint assembly enables two furniture parts to be connected to each other in a very easy and robust manner.

According to one embodiment said first furniture part is a board.

The thickness of said board may be less than 30 mm, more preferably less than 18 mm and most preferably less than 8 mm.

According to one emboodiment said board is a wooden board.

According to one emboodiment said board is a form pressed board and preferably a wooden form pressed board.

According to one embodiment at least one of said protruding portions forms an anchor, or a plug, configured to receive a threaded fastening element. The protruding portion may thus comprise a hollow portion configured to receive a fastening element, e.g. a screw or a bolt.

At least one of said base portions has a non-circular shape. This has the advantage that the connector is, in an engaged position, prevented from rotating relative to the seat, which facilitates fastening of a fastening element.

According to one embodiment said first and second insertion directions are opposite to each other.

According to one embodiment at least one of said connectors is a plastic connector, which provides for a very cost-efficient solution.

According to one embodiment at least one of said connectors is molded.

According to one embodiment the joint assembly comprises at least one fastening element. The fastening element may be a separete element, e.g. a screw or a bolt.

According to one embodiment said at least one fastening element is self-tapping, e.g. in the form of a self-tapping screw.

According to one embodiment the protruding portion comprises a self-latching member configured to contribute to maintain the first furniture part and the second furniture part connected to each other. This embodiment provides for a solution with few components.

These and other aspects of the invention will be apparent from and elucidated with reference to the claims and the embodiments described hereinafter.

### Brief Description of the Drawings

The invention will hereafter be described in more detail and with reference to the appended schematic drawings.
Figure 1 illustrates a joint assembly according to a first embodiment of the present disclosure.
Figure 2a illustrates a connector and a groove of the joint assembly shown in Figure 1.
Figure 2b shows the connector in Figure 2a when it is received in an open groove portion.
Figure 2c illustrates insertion of a connector into an undercut groove portion and shows the connector in an engaged position.
Figure 3 illustrates parts of a joint assembly according to a second embodiment of the present disclosure.
Figures 4a-4f illustrates positioning of connectors of the second embodiment into engaged positions.
Figure 5 shows a chair in an assembled state.

### Detailed Description of Preferred Embodiments of the Invention

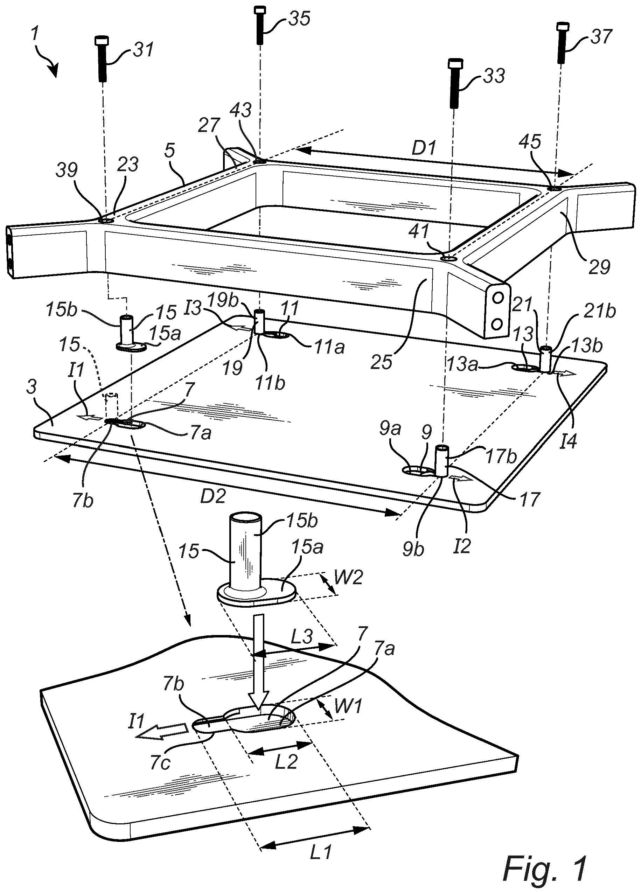

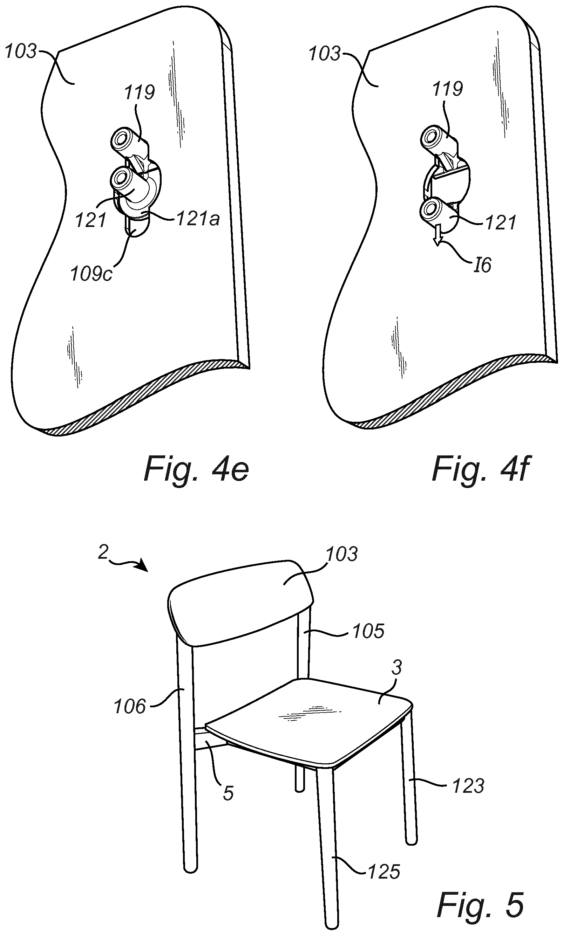

Fig.1 shows a first furniture part, in the form of a seat 3, and a second furniture part, in the form of a frame portion 5, of a chair in an unassembled state and illustrates a joint assembly 1 for connecting two furniture parts 3, 5 to each other according to an embodiment of the present disclosure. In an assembled state, which is shown in Fig. 5, the seat 3 and the frame portion 5 of the chair 2 are connected to each other by means of the joint assembly 1.

Four grooves 7, 9, 11, 13 are formed in the seat 3. Each of the four grooves 7, 9, 11, 13 has an open groove portion 7a, 9a, 11a, 13a and an undercut groove portion 7b, 9b, 11b, 13b, as best illustrated in the enlarged part of Fig. 1.

In this embodiment, the joint assembly 1 comprises the four undercut grooves 7, 9, 11, 13 formed in the seat 3, four connectors 15, 17, 19, 21, four connector receiving portions 23, 25, 27, 29 forming part of the frame portion 5 and four fastening elements, in the form of screws 31, 33, 35, 37.

With reference to the enlarged part of Fig. 1, a first one 15 of the four connectors 15, 17, 19, 21, which are identical to each other, will now be further described. The first connector 15 has a flat base portion 15a and a protruding portion 15b. The base portion 15a has a non-circular shape which is configured to be received in the open groove portion 7a, as illustrated by the arrow in Fig. 1, and inserted into an engaged position in the undercut groove portion 7b. In the engaged position the undercut 7c of the undercut groove portion 7b prevents the connector 15 from being moved in the longitudinal direction of the protruding portion 15b of the connector 15, i.e. in a direction away from the seat 3. Furthermore, in the engaged position, the connector 15 is prevented from rotating relative to the seat 3 due to the non-circular shape of the base portion 15a of the connector 15.

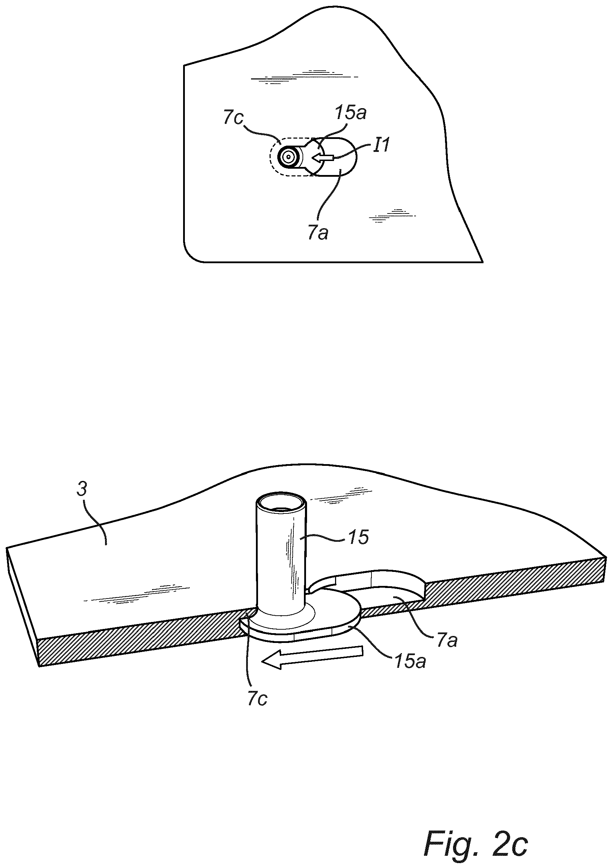

The length L1 of the groove 7 is approximately 1.5 times the length L3 of the base portion 15a of the connector 15 to allow movement of the connector 15 when the base portion 15a is received in the groove 7. The length L2 of the open groove portion 7a is approximately the same as the length L3 of the base portion 15a of the connector 15. Also, the shape of the open groove portion 7a corresponds to the shape of the base portion 15a to allow the base portion 15a to be received in the open groove portion 7a. The width W1 of the groove 7 is just slightly larger than the width W2 of the non-circular base portion 15a to allow only linear movement of the connector 15 when the base portion 15a is received in the groove 7. In the engaged position, illustrated in Fig. 2c, the connector 15 is thus rotationally locked, which enables a threaded fastening element 31, to be fastened to the protruding portion 15b in an easy manner. The width of the groove 7 and the shape of the base portion 15a of the connector 15 are thus configured to allow only linear displacement of the connector 15 and, thus, to prevent the connector 15 from rotating relative to the seat 3. The connector 15 may thus be linearly moved, in an insertion direction 11, into the engaged postion or, in an opposite direction, away from the engaged position to an disengaged position.

Each connector receiving portion 23, 25, 27, 29 comprises a through hole 39, 41, 43, 45 configured to receive the protruding portion 15b, 17b, 19b, 21b of a connector 15, 17, 19, 21. Hence, the frame portion 5 has a first connector receiving hole 39, which is configured to receive the protruding portion 15b of the first connector 15, a second connector receiving hole 41, which is configured to receive the protruding portion 17b of the second connector 17, a third connector receiving hole 43, which is configured to receive the protruding portion 19b of the third connector 19 and a fourth connector receiving hole 45, which is configured to receive the protruding portion 21b of the fourth connector 21; when the connectors 15, 17, 19, 21 are situated in their respective engaged positions.

Each protruding portion 15b, 17b, 19b, 21b is configured to receive a fastening element. To this end, each protruding portion 15b, 17b, 19b, 21b is at least partly hollow. Each protruding portion 15b, 17b, 19b, 21b thus forms an anchor, or a plug, for receiving a self-tapping screw 31, 33, 35, 37. Optionally, such a hollow protruding portion may comprise an internally threaded passage.

The four connector receiving holes 39, 41, 43, 45 formed in the frame portion 5 are situated such that each connector receiving hole 39, 41, 43, 45 is configured to receive a respective protruding portion 15b, 17b, 19b, 21b of the connectors 15, 17, 19, 21 when they are situated in their respective engaged positions and to maintain them in their respective engaged positions. To this end, the distance D1 between the centre of the first circular connector receiving hole 39 and the centre of the second circular connector receiving hole 41 is thus substantially the same as the distance D2 between the centre of the first protruding portion 15b of the first connector 15 and the centre of the protruding portion 17b of the second connector 17, as measured when each of the first and the second connectors 15, 17 is situated in its engaged position. Also, the distance D1 between the centre of the third circular connector receiving hole 43 and the centre of the fourth circular connector receiving portion 45 is substantially the same as the distance D2 between the centre of the protruding portion 19b of the third connector 19 and the centre of the protruding portion 21b of the fourth connector 21, as measured when each of the third and the fourth connectors 19, 21 is situated in its engaged position.

In this embodiment the seat 3 is formed from a form pressed wooden board having a thickness of 6 mm.

Upon connecting the seat 3 and frame portion 5 to each other, each of the connectors 15, 17, 19, 21 is moved into a respective engaged position. In this step, the base portion 15a of the first connector 15 is inserted in a first insertion direction I1 into the first undercut portion 7a of the first groove 7, the second connector 17 is inserted in a second insertion direction I2 into the second undercut portion 9b of the second groove 9, the third connector 19 is inserted in a third insertion direction I3 into the undercut portion 11b of the third groove 11 and the fourth connector 21 is inserted in a fourth insertion direction I4 into the undercut portion 13b of the fourth groove 13. The first and the second insertion directions I1, I2 are different to each other. In this embodiment the first and the second insertion directions I1, I2 are opposite to each other. Also, the third and the fourth insertion directions are opposite to each other.

In Fig. 1, the first connector 15 is shown in a position from which it may be received by the open groove portion 7a of the groove 7 and then inserted into its engaged position in the undercut portion 7a, while the three other connectors 17, 19, 21 are shown in their respective engaged positions. In the state shown in Fig. 1 the first connector 15 is thus the only connector that has not yet been positioned in its engaged position.

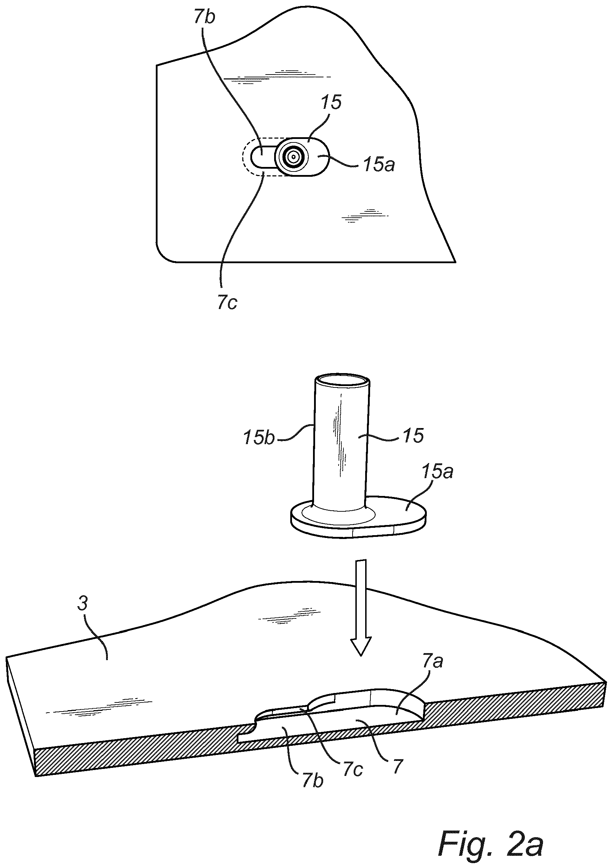

With reference to Figs. 2a-2d positioning of the first connector 15 into an engaged position in the groove 7 will now be decribed.

In a first step, the base portion 15a is moved into a disengaged position in the open groove portion 7a of the groove 7, as illustrated by the arrow in Fig. 2a.

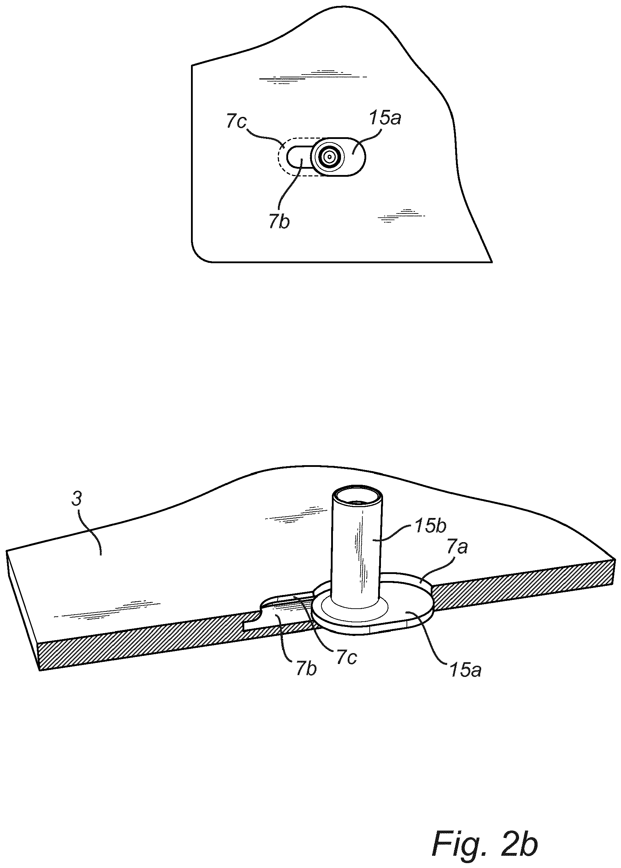

Fig. 2b shows the connector 15 in the disengaged position, i.e. in a position in which the base portion 15a is received in the open groove portion 7a of the groove 7.

In a subsequent step, the connector 15 is inserted in the first insertion direction I1 into an engaged position, illustrated in Fig. 2c, in the undercut portion 7b of the groove 7, as illustrated by the arrow in Fig. 2c, which arrow also serve to illustrate the first insertion direction I1.

It is appreciated that in an alternative embodiment, a joint assembly according to the present disclosure comprises only two grooves of the type illustrated in Fig. 1. Then, only two connectors and two connector receiving portions are needed. Also, it is appreciated that the first an the second insertion directions do not need to be opposite to each other. In an alternative embodiment, an angle, e.g. an angle of 90° or 45°, is formed between the first and the second insertion directions.

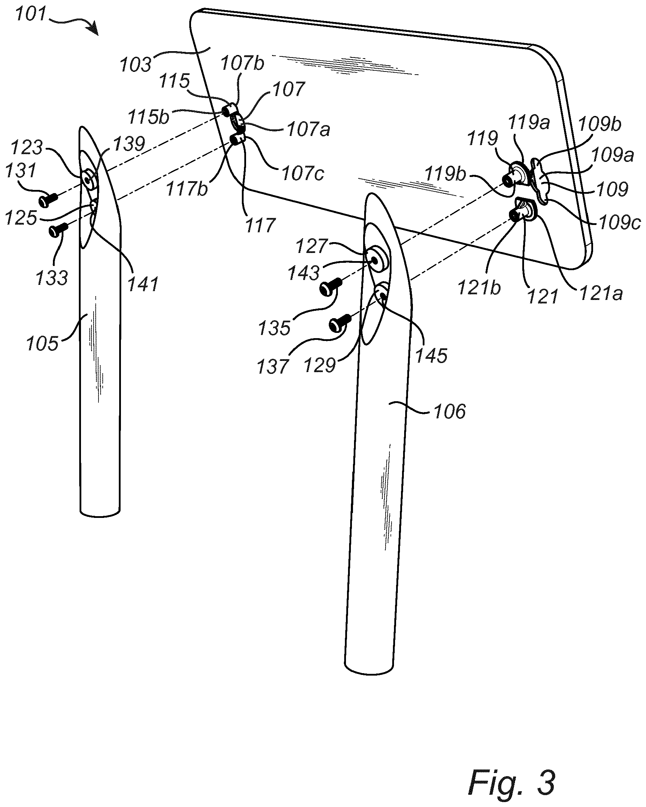

Fig. 3 illustrates a joint assembly 101 according to a second embodiment of the present disclosure.

The joint assembly 101 comprises a firt groove 107 formed in a backrest 103 of a chair, a second groove 109 formed in the backrest 103, four connectors 115, 117, 119, 121, a first furniture part, in the form of a first backrest supporting structure part 105, and a second furniture part, in the form of a second backrest supporting structure part 106, two connector receiving portions 123, 125 formed in the first backrest supporting structure part 105, two connector receiving portions 127, 129 formed in the second backrest supporting structure part 106 and four fastening elelements in the form of screws 131, 133, 135, 137.

The first groove 107 has an open groove portion 107a and two undercut groove portions 107b, 107c. The second groove 109 has an open groove portion 109 and two undercut groove portions 109b, 109c.

Each of the connectors 115, 117, 119, 121 has a base portion 115a, 117a, 119a, 121a, which is configured to be received in the open groove portion 107a, 109a of one of the grooves 107, 109, and a protruding portion 115b, 117b, 119b, 121b which is configured to be received in a connector receiving portion 123, 125, 127, 129.

Each connector receiving portion 123, 125, 127, 129 comprises a through hole 139, 141, 143, 145 configured to receive the protruding portion 115b, 117b, 119b, 121b of a connector 115, 117, 119, 121. Hence, the first frame part 105 has a two connector receiving holes 139, 141, which are configured to receive the protruding portion 115b of the first connector 115 and the protruding porting 117b of the second connector 117, respectively, and, the second frame part 106 has two connector receiving holes 143, 145, which are configured to receive the protruding portion 119b of the third connector 119 and the protruding portion 121b of the fourth connector 121, respectively; when the connectors 115, 117, 119, 121 are situated in their respective engaged positions.

The two connector receiving holes 139, 141 formed in the first backrest supporting structure part 105 are situated such that they are configured to receive a respective protruding portion 115b, 117b of the connectors 115, 117 when they are situated in their respective engaged positions and to maintain them in their respective engaged positions.

The two connector receiving holes 143, 145 formed in the second backrest supporting structure part 106 are situated such that they are configured to receive a respective protruding portion 115b, 117b of the connectors 115, 117 when the connectors are situated in their respective engaged positions and to maintain them in their respective engaged positions.

Each protruding portion 115b, 117b, 119b, 121b is configured to receive a fastening element, e.g. a screw or a bolt. To this end, each protruding portion 115b, 117b, 119b, 121b is at least partly hollow. Each protruding portion 115b, 117b, 119b, 121b thus forms an anchor or a plug for receiving a bolt 131, 133, 135, 137.

Each of the connectors 115, 117, 119, 121 is thus insertable into an engaged position in a respective undercut groove portion 107b, 107c, 109b, 109c. In Fig. 3, the first connector 115 and the second connector 117 are shown in their respective engaged positions, while the third connector 119 and the fourth connector 121 are shown in positions from which they may be received by the open groove portion 109a, and then inserted into their respective engaged positions

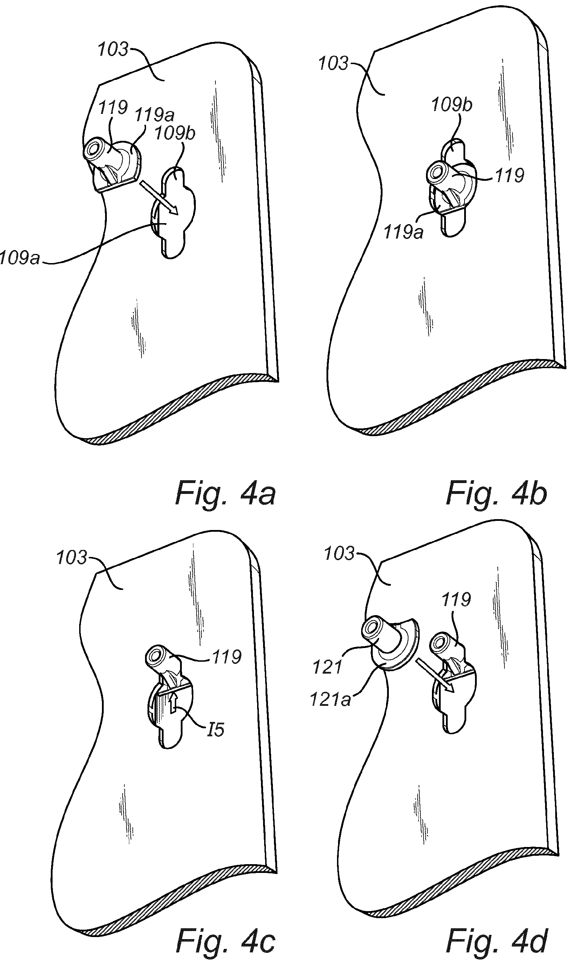

With reference to Figs. 4a-4f positioning of the third and the fourth connectors 119, 121 into their respective engaged positions will now be decribed.

In a first step, the base portion 119a is moved into a disengaged position in the open groove portion 109a of the groove 109, as illustrated by the arrow in Fig. 4a.

Fig. 4b shows the third connector 119 in the disengaged position, in which the base portion 119a is received in the open groove portion 109a of the groove 109.

In a subsequent step, the third connector 119 is inserted, in a fifth insertion direction 15, into an engaged position, illustrated in Fig. 4c, in the undercut portion 109b of the groove 109.

Then, the base portion 121a of the fourth connector 121 is moved into a disengaged position in the open groove portion 109a of the groove 109, as illustrated by the arrow in Fig. 4d.

Fig. 4e shows the fourth connector 121 in a disengaged position.

In a subsequent step, the fourth connector 121 is inserted, in a sixth insertion direction 16, into an engaged position, illustrated in Fig. 4f, in the second undercut portion 109c of the groove 109.

The assembly 101 according to the second embodiment thus differs from the assembly 1 according to the first embodiment in that two connectors are received in one single groove having one open groove portion and two undercut groove portions. As in the first embodiment, the undercut groove portions are situated such that the connectors are insertable in different insertion directions into a respective engaged position.

Fig. 5 shows a chair 2 in which a seat 3 and a frame portion are connected to each other by means of a joint assembly according to the first embodiment described hereinbefore and in which a backrest 103 is connected to a first backrest supporting structure part 105 and a second backrest supporting structure part 106 by means of a joint assembly according to the second embodiment described hereinbefore. The chair 2 further comprises two front legs 123, 125, each of which is connected to the frame portion 5 by means of fastening elements, such as screws or bolts.

It is appreciated that in an alternative embodiment, a joint assembly according to the present disclosure comprises only one groove of the type illustrated in Fig. 3. Then, only two connectors and two connector receiving portions are needed.

It is realized by a person skilled in the art that features from various embodiments disclosed herein may be combined with one another in order to provide further alternative embodiments.

It is appreciated that a joint assembly according to the present disclosure does not need to comprise fastening elements, although fastening elements, especially in the form of separate fastening elements, are preferred since they contribute to a more robust connection.

Furthermore, separate fastening elements, as used in the embodiments described hereinabove, provide for a robust solution that may be dissassembled in an easier manner compared to a solution having integrated fastening elements, e.g. in the form of self latching fastening members.

## Claims

1. A joint assembly (1; 101) for connecting a first furniture part (3; 103) and a second furniture part (5; 106) to each other,
whereby said joint assembly (1; 101) comprises
a first undercut groove portion (7b; 109b) formed in said first furniture part (3; 103),
a second undercut groove portion (9b; 109c) formed in said first furniture part (3; 103),
a first connector (15; 119) comprising a base portion (15a; 119a) and a protruding portion (15b; 119b), said base portion (15a; 119a) being insertable, in a first insertion direction (11; 15), into an engaged position in one of said undercut groove portions (7b, 9b; 109b; 109c),
a second connector (17; 121) comprising a base portion (17a; 121a) and a protruding portion (17b; 121b), said base portion (17a; 112a) being insertable, in a second insertion direction (12; 16), into an engaged position in one of said undercut groove portions (7b, 9b; 109b, 109c), wherein said first and said second insertion directions (11, 12; 15, 16) are different from each other,
a first connector receiving portion (23, 39; 127, 143) formed in said second furniture part (5; 106) and configured to receive one of said connectors (15, 17; 119, 121),
a second connector receiving portion (25, 41; 129, 145) formed in said second furniture part (5; 106) and configured to receive one of said connectors (15, 17; 119, 121) said connector receiving portions (23, 39, 25, 41; 127, 143, 129, 145) being situated so as to receive the first and the second connectors (15, 17; 119, 121) when they are situated in their respective engaged positions and to maintain them in their respective engaged positions,
**characterised in that** at least one of said base portions (15a, 17a; 119a, 121a) has a non-circular shape.

2. A joint assembly (1, 101) according to claim 1, wherein said first furniture part is a board (3; 103).

3. A joint assembly (1, 101) according to claim 2, wherein the thickness of said board (3; 103) is less than 30 mm, more preferabley less than 18 mm and most preferably less than 8 mm.

4. A joint assembly (1, 101) according to any of claims 2-3, wherein said board (3; 103) is a form pressed board and preferably a wooden form pressed board.

5. A joint assembly (1, 101) according to any of the preceding claims, wherein at least one of said protruding portions (15b, 17b; 119b, 121b) forms an anchor configured to receive a threaded fastening element (31, 33; 135, 137).

6. A joint assembly (1; 101) according to any of the preceding claims, wherein said first and second insertion directions (11, 12; 15, 16) are opposite to each other.

7. A joint assembly (1; 101) according to any of the preceding claims, wherein at least one of said connectors (15, 17; 119, 121) is a plastic connector.

8. A joint assembly (1; 101) according to any of the preceding claims, wherein at least one of said connectors (15, 17; 119, 121) is molded.

9. A joint assembly (1; 101) according to any of the preceding claims, wherein the joint assembly (1, 101) comprises at least one fastening element (31, 33; 135, 137).

10. A joint assembly (1; 101) according to claim 9, wherein said at least one fastening element (31, 33; 135, 137) is self-tapping.

## Patentansprüche

1. Verbindungsbaugruppe (1; 101) zum Verbinden eines ersten Möbelteils (3; 103) und eines zweiten Möbelteils (5; 106) miteinander,
wobei die Verbindungsbaugruppe (1; 101) Folgendes umfasst:
einen ersten hinterschnittenen Rillenabschnitt (7b; 109b), der in dem ersten Möbelteil (3; 103) geformt ist,
einen zweiten hinterschnittenen Rillenabschnitt (9b; 109c), der in dem ersten Möbelteil (3; 103) geformt ist,
einen ersten Verbinder (15; 119), der einen Basisabschnitt (15a; 119a) und einen vorspringenden Abschnitt (15b; 119b) umfasst, wobei der Basisabschnitt (15a; 119a), in einer ersten Einsetzrichtung (I1; I5), in eine eingerückte Stellung in einem der hinterschnittenen Rillenabschnitte (7b, 9b; 109b; 109c) einsetzbar ist,
einen zweiten Verbinder (17; 121), der einen Basisabschnitt (17a; 121a) und einen vorspringenden Abschnitt (17b; 121b) umfasst, wobei der Basisabschnitt (17a; 112a), in einer zweiten Einsetzrichtung (I2; I6), in eine eingerückte Stellung in einem der hinterschnittenen Rillenabschnitte (7b, 9b; 109b; 109c) einsetzbar ist, wobei sich die erste und die zweite Einsetzrichtung (I1, I2; I5, I6) voneinander unterscheiden,
einen ersten Verbinderaufnahmeabschnitt (23, 39; 127, 143), der in dem zweiten Möbelteil (5; 106) geformt und dafür konfiguriert ist, einen der Verbinder (15, 17; 119, 121) aufzunehmen,
einen zweiten Verbinderaufnahmeabschnitt (25, 41; 129, 145), der in dem zweiten Möbelteil (5; 106) geformt und dafür konfiguriert ist, einen der Verbinder (15, 17; 119, 121) aufzunehmen, wobei die Verbinderaufnahmeabschnitte (23, 39, 25, 41; 127, 143, 129, 145) so angeordnet sind, dass sie den ersten und den zweiten Verbinder (15, 17; 119, 121) aufnehmen, wenn sie in ihren jeweiligen eingerückten Stellungen angeordnet sind, und sie in ihren jeweiligen eingerückten Stellungen halten,
**dadurch gekennzeichnet, dass** wenigstens einer der Basisabschnitte (15a, 17a; 119a, 121a) eine nicht-kreisförmige Gestalt aufweist.

2. Verbindungsbaugruppe (1, 101) nach Anspruch 1, wobei das erste Möbelteil eine Platte (3; 103) ist.

3. Verbindungsbaugruppe (1, 101) nach Anspruch 2, wobei die Dicke der Platte (3; 103) weniger als 30 mm, insbesondere weniger als 18 mm und am bevorzugtesten weniger als 8 mm beträgt.

4. Verbindungsbaugruppe (1, 101) nach einem der Ansprüche 2 bis 3, wobei die Platte (3; 103) eine formgepresste Platte und vorzugsweise eine hölzerne formgepresste Platte ist.

5. Verbindungsbaugruppe (1, 101) nach einem der vorhergehenden Ansprüche, wobei wenigstens einer der vorspringenden Abschnitte (15b, 17b; 119b, 121b) einen Anker bildet, der dafür konfiguriert ist, ein mit Gewinde versehenes Befestigungselement (31, 33; 135, 137) aufzunehmen.

6. Verbindungsbaugruppe (1; 101) nach einem der vorhergehenden Ansprüche, wobei die erste und die zweite Einsetzrichtung (I1, I2; I5, I6) zueinander entgegengesetzt sind.

7. Verbindungsbaugruppe (1; 101) nach einem der vorhergehenden Ansprüche, wobei wenigstens einer der Verbinder (15, 17; 119, 121) ein Kunststoffverbinder ist.

8. Verbindungsbaugruppe (1; 101) nach einem der vorhergehenden Ansprüche, wobei wenigstens einer der Verbinder (15, 17; 119, 121) geformt ist.

9. Verbindungsbaugruppe (1; 101) nach einem der vorhergehenden Ansprüche, wobei die Verbindungsbaugruppe (1, 101) wenigstens ein Befestigungselement (31, 33; 135, 137) umfasst.

10. Verbindungsbaugruppe (1; 101) nach Anspruch 9, wobei das wenigstens eine Befestigungselement (31, 33; 135, 137) selbstschneidend ist.

## Revendications

1. Ensemble de joint (1 ; 101) destiné à connecter une première pièce de meuble (3 ; 103) et une seconde pièce de meuble (5 ; 106) l'une à l'autre,
dans lequel ledit ensemble de joints (1 ; 101) comprend
une première section de gorge en contre-dépouille (7b ; 109b) formée dans ladite première pièce de meuble (3 ; 103),
une seconde section de gorge en contre-dépouille (9b ; 109c) formée dans ladite première pièce de meuble (3 ; 103),
un premier connecteur (15 ; 119) comprenant une section de base (15a ; 119a) et une section saillante (15b ; 119b), ladite section de base (15a ; 119a) étant insérable, dans un premier sens d'insertion (I1 ; I5), dans une position engagée dans l'une desdites sections de gorge en contre-dépouille (7b, 9b ; 109b ; 109c),
un second connecteur (17 ; 121) comprenant une section de base (17a ; 121a) et une section saillante (17b ; 121b), ladite section de base (17a ; 112a) étant insérable, dans un second sens d'insertion (I2 ; I6), dans une position engagée dans l'une desdites sections de gorge en contre-dépouille (7b, 9b ; 109b ; 109c), et ledit premier et ledit second sens d'insertion (I1, I2 ; I5, I6) étant différents l'un de l'autre,
une première section réceptrice de connecteur (23, 39 ; 127,143) formée dans ladite seconde pièce de meuble (5 ; 106) et conçue pour recevoir un desdits connecteurs (15, 17 ; 119, 121),
une seconde section réceptrice de connecteur (25, 41 ; 129, 145) formée dans ladite seconde pièce de meuble (5 ; 106) et conçue pour recevoir un desdits connecteurs (15, 17 ; 119, 121), lesdites sections réceptrices de connecteurs (23, 39, 25, 41 ; 127, 143, 129, 145) étant situées de manière à recevoir les premier et second connecteurs (15 ,17 ; 119, 121), lorsqu'ils sont situés dans leurs positions engagées respectives et pour les maintenir dans leurs positions engagées respectives,
**caractérisé en ce qu'**au moins une desdites sections de base (15a, 17a ; 119a, 121a) a une forme non circulaire.

2. Ensemble de joint (1,101) selon la revendication 1, dans lequel ladite pièce de meuble est un panneau (3 ; 103).

3. Ensemble de joint (1,101) selon la revendication 2, dans lequel l'épaisseur dudit panneau (3 ; 103) est de moins de 30 mm, plus préférentiellement moins de 18 mm et le plus préférentiellement moins de 8 mm.

4. Ensemble de joint (1,101) selon l'une quelconque des revendications 2 à 3, dans lequel ledit panneau (3 ; 103) est un panneau moulé à la presse et de préférence un panneau en bois moulé à la presse.

5. Ensemble de joint (1,101) selon l'une quelconque des revendications précédentes, dans lequel au moins une desdites sections saillantes (15b, 17b ; 119b, 121b) forme une ancre conçue pour recevoir un élément de fixation fileté (31, 33 ; 135, 137).

6. Ensemble de joint (1 ;101) selon l'une quelconque des revendications précédentes, dans lequel lesdits premier et second sens d'insertion (I1, I2 ; I5, I6) sont opposés l'un à l'autre.

7. Ensemble de joint (1 ;101) selon l'une quelconque des revendications précédentes, dans lequel au moins un desdits connecteurs (15 ,17 ; 119, 121) est un connecteur en plastique.

8. Ensemble de joint (1 ;101) selon l'une quelconque des revendications précédentes, dans lequel au moins un desdits connecteurs (15, 17 ; 119 ,121) est moulé.

9. Ensemble de joint (1 ;101) selon l'une quelconque des revendications précédentes, dans lequel l'ensemble de joint (1,101) comprend au moins un élément de fixation (31, 33 ; 135, 137).

10. Ensemble de joint (1,101) selon la revendication 9, dans lequel ledit au moins un élément de fixation (31, 33 ; 135, 137) est autotaraudeur.
